(19) Europäisches Patentamt
European Patent Office
Office européen des brevets

(11) **EP 2 052 887 B1**

(12) **EUROPÄISCHE PATENTSCHRIFT**

(45) Veröffentlichungstag und Bekanntmachung des Hinweises auf die Patenterteilung:
**30.05.2018 Patentblatt 2018/22**

(51) Int Cl.:
*B60G 17/0165* (2006.01)    *B60G 17/018* (2006.01)
*B60G 17/06* (2006.01)    *B60G 17/0195* (2006.01)
*B60W 40/06* (2012.01)    *B60W 40/10* (2012.01)
*B60W 10/22* (2006.01)

(21) Anmeldenummer: **08018570.5**

(22) Anmeldetag: **23.10.2008**

(54) **Verfahren und System zur Beeinflussung der Bewegung eines in seinen Bewegungsabläufen steuerbaren oder regelbaren Fahrzeugaufbaus eines Kraftfahrzeuges und Fahrzeug**

Method and system for affecting the movement of a vehicle structure on a powered vehicle and vehicle controlled or regulated by its movement processes

Procédé et système destinés à influencer le mouvement d'une caisse d'un véhicule automobile ou d'un véhicule, pouvant être commandée ou réglée dans ses déroulements de mouvements

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.10.2007 DE 102007051213**

(43) Veröffentlichungstag der Anmeldung:
**29.04.2009 Patentblatt 2009/18**

(73) Patentinhaber: **Volkswagen Aktiengesellschaft 38440 Wolfsburg (DE)**

(72) Erfinder: **Arenz, Andrea 38458 Velpke (DE)**

(56) Entgegenhaltungen:
WO-A1-03/035417    DE-A1- 3 918 735
DE-A1- 3 930 517    DE-A1- 4 116 839
DE-A1- 10 016 896    DE-A1- 10 019 763

EP 2 052 887 B1

**Beschreibung**

Die Erfindung betrifft ein Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden, der Dämpferregler wenigstens ein Steuersignal zur Ansteuerung von Aktuatoren, insbesondere von semiaktiven oder aktiven Dämpfern, liefert, mittels denen die Bewegung des Fahrzeugaufbaus beeinflusst werden kann. Die Erfindung betrifft ferner ein System zur Durchführung des Verfahrens und ein Fahrzeug, insbesondere Kraftfahrzeug, mit einem System zur Beeinflussung der Bewegung eines in seinen Bewegungsabläufen steuerbaren oder regelbaren Fahrzeugaufbaus.

Verfahren und Systeme der gattungsgemäßen Art sind bekannt. So ist beispielsweise aus DE 39 18 735 A1 ein Verfahren und eine Vorrichtung zur Dämpfung von Bewegungsabläufen an Fahrwerken von Personen- und Nutzkraftfahrzeugen bekannt, bei denen aus einer sensorisch ermittelten Bewegung zweier Fahrzeugmassen mittels einer Signalverarbeitungsschaltung ein Steuersignal für einen steuerbaren, an den Fahrzeugmassen angreifenden Aktuator gebildet wird. Für eine komfortable und dennoch sichere Fahrwerkabstimmung ist vorgesehen, die sensorisch ermittelten Signale über eine der Signalverarbeitungsschaltung angehörenden Schaltungsanordnung mit frequenzabhängigem Übertragungsverhalten zu leiten. Hierdurch soll erreicht werden, dass aufgrund der frequenzabhängigen Verarbeitung der Sensorsignale keine statische Kennlinie für die Aktuatorsteuerung beziehungsweise Aktuatorregelung eingesetzt wird, sondern eine von dem Frequenzinhalt des Bewegungsablaufs abhängige Aktuatorsteuerung beziehungsweise Aktuatorregelung erfolgt. Hierdurch soll das Ziel eines möglichst hohen Fahrkomforts bei einer auch in Grenzbereichen des Fahrzustandes sicheren Auslegung des Fahrwerks erzielt werden. Diesem Ansatz liegt der Gedanke zugrunde, dass dem Zielkonflikt zwischen gewünschtem Fahrkomfort, das heißt komfortable und weiche Auslegung, und Fahrdynamik, das heißt sportliche und straffe Abstimmung, einerseits und einer ausreichenden Fahrsicherheit andererseits entsprochen werden soll. Für Fahrkomfort und Fahrdynamik ist eine Dämpfung der Bewegung des Aufbaus entscheidend, während für eine Fahrsicherheit eine Radlast beziehungsweise Radlastschwankung entscheidend ist.

Aus DE 39 30 517 ist eine Vorrichtung zur fahrbahnabhängigen Fahrwerksregelung eines Fahrzeuges mit den dynamischen Fahrzustand erfassenden Sensoren bekannt. Die Sensorsignale werden einer Auswerteschaltung zugeführt, die ein für die Fahrbahnunebenheit charakteristisches Signal erzeugt und mit einer Federanordnung des Fahrzeuges zusammenwirkenden Aktuatoren steuert. Hierbei wird für jedes Rad der Momentanwert der dort vorliegenden Fahrbahnunebenheit und/oder Fahrbahnunebenheitsgeschwindigkeit aus den Daten der in jedem Radbereich angeordneten Sensoren ermittelt und einen jedem Rad zugehörigen Regelkreis als aktuelle Größe zugeführt.

Aus der WO 03/035417 A1 ist ein Verfahren zur Erzeugung von Signalen zur Beeinflussung der Bewegung eines in seinen Bewegungsabläufen steuerbaren oder regelbaren Fahrzeugaufbau eines Kraftfahrzeuges bekannt, wobei sensorisch die Bewegung des Fahrzeugaufbaus ermittelt wird, die den ermittelten Sensorwerten entsprechenden Sensorsignale werden einem Dämpferregler zugeführt und der Dämpferregler liefert wenigstens ein Steuersignal zur Ansteuerung von semi-aktiven oder aktiven Dämpfen, mittels deren die Bewegung des Fahrzeugaufbaus beeinflusst werden kann. Dabei werden bei der Ermittlung des wenigstens einen Steuersignals der Einfluss externer Störeinflüsse, insbesondere aus einer Straßenanregung, berücksichtigt. Dabei wird eine spektrale Energiedichte der Störeinflüsse gemessen und bei dem Steuersignal berücksichtigt.

Aus der DE 100 16 896 A1 ist eine Vorrichtung zum Schätzen einer kinetischen Zustandsgröße zur Verwendung mit einem Fahrzeug mit einem Dämpfer bekannt, der eine Dämpfungskraft entsprechend einem Blendenöffnungsgrad einer Dämpferblende erzeugt, wobei die Vorrichtung zum Schätzen einer kinetischen Zustandsgröße eine vertikale kinetische Zustandsgröße eines gefederten Elements relativ zu einem ungefederten Element schätzt unter Verwendung: einer Einrichtung zum Erfassen einer absoluten kinetischen Zustandsgröße, welche eine vertikale kinetische Zustandsgröße des gefederten Elements relativ zum absoluten Raum erfasst; eines Beobachters, der die vertikale kinetische Zustandsgröße und einer nichtlinearen Komponente der durch den Blendenöffnungsgrad bestimmten Dämpfungskraft des Dämpfers als Regeleingang schätzt, wobei die Vorrichtung zum Schätzen einer kinetischen Zustandsgröße eine erste Kompensiereinrichtung zum Bestimmen einer Federkraft eines Stabilisators auf der Grundlage eines Betrags einer Relativverschiebung des gefederten Elements relativ zu dem ungefederten Element und Kompensieren des Regeleingangs des Beobachters auf der Grundlage der bestimmten Federkraft aufweist.

Aus der DE 100 19 763 A1 ist eine Dämpfungskraft-Regelvorrichtung zum Regeln von Dämpfungskräften von Dämpfern bekannt, die zwischen einer Fahrzeugkarosserie und jeweiligen Rädern eines Fahrzeugs angeordnet sind. Dabei ist ein Regler vorgesehen, der für jedes der Räder eine erste Soll-Dämpfungskraft, die Vibrationen der Fahrzeugkarosserie in einer Hin-und-Herrichtung unterdrückt, auf der Grundlage eines Einzelradmodells des Fahrzeugs berechnet; für jedes der Räder eine zweite Soll-Dämpfungskraft, die Vibrationen der Fahrzeugkarosserie in einer Nickrichtung unterdrückt, auf der Grundlage eines Modells von vorderen und hinteren Rädern des Fahrzeugs berechnet; eine endgültige Soll-Dämpfungskraft für jedes der Räder auf der Grundlage der berechneten ersten und zweiten Soll-Dämpfungskräfte bestimmt; und ein Regelsignal, das der bestimmten endgültigen Dämpfungskraft entspricht, derart zu jedem der Dämpfer ausgibt, dass eine Dämpfungskraft, die von jedem der Dämpfer ausgeübt wird, auf die bestimmte endgültige Soll-Dämpfungskraft festgelegt wird.

Bekannt sind im Wesentlichen drei Dämpfersysteme für Fahrzeuge, wobei einer Federanordnung zwischen Rad und Aufbau ein Aktuator parallel geschaltet ist. Bekannt sind passive, semi-aktive und aktive Dämpfersysteme. Bei passiven Dämpfersystemen ist eine Veränderung der Dämpferkraft während des Fahrbetriebes nicht vorgesehen. Bei semi-aktiven Dämpfersystemen kann die Dämpferkraft durch eine Veränderung eines Ölfluidstromes unter Verwendung eines oder mehrerer Ventile verändert werden. Auf diese Art und Weise können die Dämpfungseigenschaften verändert werden. Semi-aktive Dämpfersysteme arbeiten rein energieabsorbierend. Bei aktiven Dämpfersystemen kann eine gewünschte Dämpferkraft sowohl dämpfend als auch energieeinbringend in jede Richtung bereitgestellt werden.

Fahrbahnunebenheiten stellen im Frequenzbereich bis etwa 30 Hz die intensivste der Quellen für das Schwingungssystem Kraftfahrzeug dar. Die Fahrbahn regt einerseits durch Unebenheiten vertikale Bewegungen an und wird andererseits als deren Wirkung durch Radlastschwankungen beansprucht. Im Allgemeinen treten Fahrbahnunebenheiten als Anregungen mit unterschiedlicher Amplitude und Wellenlänge in unregelmäßigen Abständen auf. Man spricht von einer stochastischen Fahrzeuganregung. Um die Wirkung der Fahrbahnunebenheiten auf das Schwingungssystem-Kraftfahrzeug zu untersuchen ist ein erheblicher mathematischer Aufwand erforderlich, als dessen Ergebnis schließlich Darstellungen der spektralen Leistungsdichte in Abhängigkeit von der Wegkreisfrequenz festgelegt wurden.

Der Erfindung liegt die Aufgabe zugrunde, ein Verfahren und ein System der gattungsgemäßen Art anzugeben, mittels denen in einfacher und sicherer Weise eine Regelung der Bewegung eines Fahrzeugaufbaus mit elektronisch ansteuerbaren Aktuatoren (Dämpfern) möglich ist, wobei die Wirkung von Störeinflüssen, insbesondere aus einer Straßenanregung, sich einfach berücksichtigen lassen.

Erfindungsgemäß wird diese Aufgabe durch ein Verfahren mit den im Anspruch 1 genannten Merkmalen gelöst. Dadurch, dass bei der Ermittlung des wenigstens einen Steuersignals der Einfluss externe Störeinflüsse, insbesondere aus einer Straßenanregung berücksichtigt werden, wobei sich aufgrund der Störeinflüsse energetische Zustandsgrößen der sich bewegenden Masse des Fahrzeuges ermittelt werden, und die Beeinflussung der Bewegung des Fahrzeugsaufbaus durch Berücksichtigung der energetischen Zustandsgrößen erfolgt, ist vorteilhaft möglich, externe Störeinflüsse, insbesondere Straßenanregungen, auf die Bewegung des Fahrzeuges, insbesondere des Fahrzeugaufbaus, in einfacher Weise zu berücksichtigen. Durch die Berücksichtigung der Störeinflüsse bei der Bereitstellung der Steuersignale für die Aktuatoren, das heißt also bei der Einstellung der Dämpfung der Bewegung des Fahrzeugaufbaus, wird neben den Komfortanforderungen eines Fahrzeugführers auch den dynamischen Fahrzuständen des Fahrzeuges insbesondere auch unter Berücksichtigung sicherheitskritischer Zustände Rechnung getragen.

Im Rahmen der vorliegenden Erfindung werden Angaben über Energiebetrachtungen gemacht. Die Definition der Energie soll daher vorab näher erläutert werden. Die Energie ist eine physikalische Zustandsgröße und bedeutet in der Physik, die im System gespeicherte Arbeit oder die Fähigkeit des Systems, Arbeit zu verrichten. Eine Zustandsgröße ist eine physikalische Größe oder ein Parameter in einer Zustandsgleichung, die nur vom momentanen Zustand des betrachteten physikalischen Systems abhängt und damit unabhängig vom Weg ist, auf dem dieser Zustand erreicht wurde. Sie beschreibt eine Eigenschaft des Systems in diesem Zustand. Besonders interessant ist in dieser Hinsicht der energetische Zustand aufgrund von (äußeren) Störeinflüssen, wie beispielsweise einer Straßenanregung.

Zur Ermittlung der Energie (beziehungsweise ihres Betrags) werden Hilfsgrößen gemessen, da die Energie selbst nicht messbar ist. Energie ist, unabhängig von ihrer Energieform, eine charakteristische Größe für den Zustand eines Systems, das heißt eine Zustandsgröße.

Die Energie eines mechanischen Systems kann immer als Summe von kinetischer und potentieller Energie dargestellt werden:

$$E_{ges} = E_{kin} + E_{pot} = const$$

Kinetische Energie wird durch die Bewegung eines Systems gegenüber einem anderen System und durch seine Masse (m) beziehungsweise sein Trägheitsmoment (J) bestimmt und setzt sich aus Translationsgeschwindigkeiten (v) und/oder Rotations-/Winkelgeschwindigkeiten (w) zusammen:

$$E_{kin} = 0.5 \times m \times v^2 + 0.5 \times J \times w^2$$

Als potentielle Energie bezeichnet man die Energie, die ein System durch seine Lage im Kraftfeld besitzt, zum Beispiel auch im Gravitationsfeld der Erde, und wird bestimmt durch seine Lage (s) und seine Beschleunigung (a) beziehungsweise die Erdbeschleunigung (g):

$$E_{pot} = m \times g \times s$$

Als Arbeit bezeichnet man in der Physik eine Energiemenge, die von einem System in ein anderes übertragen wird, wobei die Übertragung im klassischen Sinn durch das Wirken einer Kraft entlang eines Weges erfolgt. Die wichtigsten Ursachen für Energieänderungen sind Kraftfelder. Somit entspricht zum Beispiel die Hubarbeit der potentiellen Energie im Gravitationsfeld. Die Beschleunigungsarbeit entspricht der kinetischen Energie, die zum Beispiel benötigt wird um einen Körper von der Geschwindigkeit v1 auf die Geschwindigkeit v2 zu beschleunigen.

Die Erfindung besteht im Prinzip also darin, nur die energetischen Zustandsgrößen zu ermitteln, die sich aufgrund der Störanregung ergeben, und diese in dem Regelungssystem zu berücksichtigen. Es werden, statt auf die Straße bezogene Zustandsgrößen oder ausschließlich auf die relative Geschwindigkeit des Dämpfers bezogene Größen energetische Zustandsgrößen bewertet, um die Straßeneinflüsse zu berücksichtigen. Diese zuletzt genannten Zustandsgrößen lassen sich vergleichsweise einfach ermitteln, da die hierzu notwendigen Sensoren in der Regel ohnehin zur Verfügung stehen.

Hierzu ist vorgesehen, sowohl kinetische als auch potentielle Energiezustände zu berücksichtigen. Dieses Merkmal geht von dem Ansatz aus, dass zwar bei einer Geschwindigkeit von null zum Beispiel hinsichtlich des Aufbaus an sich kein Grund besteht, den Dämpfer durch die Regeleinrichtung anzusprechen. Diese Fallgestaltung entspricht dem Zustand, dass die kinetische Energie ebenfalls null ist. Andererseits ist es denkbar, dass zu diesem Zeitpunkt die potentielle Energie des Aufbaus besonders hoch ist (der Aufbau ist zwar in Ruhe, aber die Federn sind stark unter Spannung), so dass es zweckmäßig ist, den Dämpfer so einzustellen, dass er bei seiner Bewegung viel Energie vernichtet, wenn die Federn versuchen den Aufbau in Bewegung zu setzen.

Weiter ist vorgesehen, den potentiellen und den kinetischen Energiezustand über eine Kombinationseinheit zu einer Gesamtenergie zusammenzufassen. Hierdurch erhält man zwei Vorteile. Zum einen bekommt der nachgeschaltete Regler nur ein einziges, die beiden Energiezustände beinhaltendes Eingangssignal. Zum anderen ist es möglich, die beiden Energiezustände in ihrer Bedeutung für die Dämpfung des Fahrzeugs zu gewichten, indem sie beispielsweise nur einfach addiert oder aber auch in einem bestimmten Verhältnis miteinander zu einem Gesamtsignal verknüpft werden.

In bevorzugter Ausgestaltung der Erfindung ist vorgesehen, die festgestellten energetischen Zustandsgrößen als Eingangsgrößen oder Ausgangsgrößen für nachfolgende Regler anzuwenden oder aber auch so genannten Entscheidern zuzuführen, die aufgrund vorgegebener Auswahlkriterien die ihnen zugeführten Zustandsgrößen bewerten und weiterverarbeiten.

Um das Regelungssystem an die unterschiedlichen Anforderungen hinsichtlich der Regelung der Fahrzeugdrehbewegung anzupassen, ist in weiterer bevorzugter Ausgestaltung der Erfindung vorgesehen, dass kinetische und/oder potentielle Energiezustände einzelner Körper berücksichtigt werden. Stellt man beispielsweise fest, dass die dem Rad zugeführte Gesamtenergie geringfügig ist, aber die dem Aufbau zuzuordnende Energie sehr hoch, so wird man die zur Verfügung stehende Kraft des Dämpfers im Wesentlichen der Bewegung des Aufbaus entgegenstellen. Etwas anderes ist es, wenn gleichzeitig festgestellt wird, dass auch die von dem Rad aufgenommene Energie sehr hoch ist. In diesem Fall muss versucht werden, das Rad möglichst gut auf der Straße zu halten, auch wenn dabei der Komfort der im Aufbau befindlichen Fahrgäste kleiner gehalten werden muss. Man wird also den Dämpfer so behandeln, dass er sich primär der Bewegung des Rades entgegenstellt. Weiter ist bevorzugt vorgesehen, die energetischen Zustände der einzelnen Körper zu einem Gesamtsignal zusammenzufassen, um den nachgeschalteten Regler einfacher aufbauen zu können.

In weiterer bevorzugter Ausgestaltung der Erfindung ist vorgesehen, die verschiedenen energetischen Zustände der einzelnen Körper des Fahrzeugs wie beispielsweise Rad, Aufbau oder Dämpfer, für einen oder mehrere nachgeschalteter Regler in unterschiedlicher Kombination zusammenzufassen, so dass jedes dieser nachgeschalteten Regler sein eigenes optimiertes Eingangssignal erhält. Die Zusammenfassung kann bevorzugt durch eine Kombinationseinheit erfolgen.

Ferner ist in bevorzugter Ausgestaltung der Erfindung vorgesehen, weitere Eingangsgrößen, wie Fahrzustand, Fahreraktivität, Fahrgeschwindigkeit, Fahrverhalten oder dergleichen zu berücksichtigen. Bevorzugt werden diese zusätzlichen Größen verwendet, um die energetischen Zustandsgrößen zu korrigieren. Diese Korrektureinheit kann dabei an beliebiger Stelle der Regelungskomponente angeordnet sein.

Soweit die einzelnen energetischen Zustände nicht schon (durch entsprechende von Sensoren gebildete Signalquellen) voneinander getrennt behandelt werden können, ist in weiterer bevorzugter Ausgestaltung der Erfindung vorgesehen, dass Filter spezielle (Frequenz-) Ausprägungen der Eingangsgrößen der Berechnungseinheit der energetischen Zustandsgrößen ermöglichen. Die entsprechend ausgestaltete Filtersorgen für die Trennung der einzelnen energetischen Zustände, was in der Regel durch die Berücksichtigung der diesen Zuständen immanenten Frequenzen geschehen kann. Darüber hinaus ist bevorzugt, die durch ihre Eigenfrequenzen dem Aufbau und dem Rad zuzuordnenden Signale unterschiedlich zu behandeln.

Zusammenfassend lässt sich die Erfindung wie folgt beschreiben. Auf ein Fahrzeug hat als "externe Störgröße" insbesondere die Straße einen sehr großen Einfluss. Dieser geht so weit, dass die an sich aufgrund der Eigenfrequenzen bestimmten harmonischen Bewegungen eines Fahrzeugs durch die von der Straße aufgeprägten Zwangsanregungen dominiert werden. Zur effektiven Regelung eines Fahrzeugs ist daher der Einfluss der Straße eine sehr wichtige Größe.

Im Stand der Technik wird die Straße bezüglich ihrer Anregungsfrequenzen analysiert und so eine Straßengüte ermittelt.

Der vorliegende neuen Ansatz geht nun davon aus, dass nicht primär die Straßengüte die relevante Größe ist, sondern der sich aufgrund der Straßenanregung ergebende energetische Zustand des Systems und seiner einzelnen Komponenten. Das heißt der "äußere" Straßenzustand wirkt sich auf jede Strecke anders aus und bewirkt so einen energetischen Zustand oder "inneren" Straßenzustand.

Dies ist auch für jeden Normalfahrer relativ einleuchtend, wenn er mit einem Fahrzeug der Oberklasse über eine Straße fährt, wird er einen ganz anderen Eindruck von der Straße gewinnen als wenn er mit einem Fahrzeug der Unterklasse unterwegs ist.

Auf diese Weise werden implizit die Eigenfrequenzen der Regelstrecke, das heißt des Fahrzeugs mit seinen einzelnen Körpern oder Massen (wie Aufbau, Rad, Dämpfer) berücksichtigt. Ferner findet eine Adaption auf Massenänderung, zum Beispiel aufgrund anderer Beladungszustände, automatisiert statt oder anders ausgedrückt die Zustandsgröße ist selbstadaptierend.

Vorteilhaft ist ferner, dass unterschiedliche energetische Zustandsgrößen auch für die einzelnen Körper beziehungsweise Massen, wie beispielsweise Aufbau, Rad oder Dämpfer, bestimmbar sind. Somit kann explizit festgestellt werden, welchen Einfluss eine Störgröße wie die Straßenanregung auf die unterschiedlichen Komponenten hat und es besteht die Möglichkeit, auf die unterschiedlichen Ausprägungen individuell zu reagieren.

Durch die Abbildung von Störgrößen in Form von Zustandsgrößen ist es möglich, über zustandsabhängige Regelungsverfahren diesen Einfluss zu berücksichtigen. Die Notwendigkeit von Störgrößenaufschaltung oder ähnlichen Verfahren entfällt somit.

Besonders vorteilhaft ist es, die gesamten energetischen Einflüsse zu berücksichtigen indem sowohl die potentiellen als auch die kinetischen Energien gebildet werden und diese zu einer Gesamtenergie zusammengefasst werden.

Dadurch wird außerdem eine Kontinuität der energetischen Zustandsgrößen erreicht, die zum Beispiel bei einer reinen Berücksichtigung von vR, wie bei herkömmlichen Verfahren, nur über zusätzliche Filter implementierbar ist, die sehr große Zeitverzüge aufweisen.

Besonders vorteilhaft ist es, wenn die energetischen Zustandsgrößen zur Zustandsbewertung/- berücksichtigung in nachfolgenden Reglermodulen Verwendung finden. Wobei dies in Form von Eingangsgrößen, Ausgangsgrößen geschehen kann. Ferner können diese Größen für zustandsabhängige Entscheider oder Gewichter oder ähnliches genutzt werden oder aber Filtern vorgeschaltet werden.

Sinnvoll ist es häufig, die energetischen Zustände einzelner Körper zu bestimmen, zum Beispiel des Aufbaus, der Räder oder der Dämpfer und energetische Subzustandsgrößen zu bilden. Des Weiteren kann eine frequenzabhängige Wichtung erfolgen (zum Beispiel über Filterstrukturen oder aber über die Auswahl der Eingangsgrößen), so dass interessante Frequenzbereiche speziell wichtbar sind. Bei Fahrzeugen ist vorteilhaft, den Aufbau- und den Radeigenfrequenzbereich speziell zu berücksichtigen, da sich unterschiedliche Anforderungen an nachfolgende Regler ergeben, je nachdem welche Anteile dominant sind.

Um die Applizierbarkeit der Regler zu erleichtern ist vorteilhaft, dass die energetischen Subzustandsgrößen zu einer Größe zusammengefasst werden.

Es besteht nun ferner die Möglichkeit bei der Kombination, unterschiedliche Ausprägungen für die einzelnen Reglermodule zu realisieren. Beispielsweise ist für die Vertikaldynamik Sinn, mit erhöhtem Aufbaufrequenzanteil eine größere Steuergröße zu fordern und mit erhöhtem Radfrequenzanteil diese Tendenz umzukehren. Bei der Quer- oder Längsdynamik hingegen ist vor allem der Radfrequenzbereich interessant. Hier soll für eine optimale Radlastschwankung weder zu viel noch zu wenig gedämpft werden. Bei den Endlagen hingegen sind sowohl Rad- als auch Aufbauanteile wichtig, da beide dazu führen können, dass Anschläge erreicht werden. Bei der Zusammenfassung der Steuergrößen zu einer Gesamt-Reglerausgangsgröße, zum Beispiel im Stromberechnungsmodul, kann die energetische Zustandsgröße zur Ermittlung dienen, welche Reglermodulanforderung mit welchem Anteil durchgeschaltet wird.

In einer weiteren Ausprägung ist es möglich eine Korrektur der Zustandsgrößen über anderen Zustandsgrößen vorzunehmen. Beispielsweise können der Fahrzustand (wie Fahrzeuggeschwindigkeit) oder der Fahrereinfluss (zum Beispiel Tasterwahl Komfort oder Sport oder aber sportliche oder ruhige Fahrweise) oder weitere Größen Verwendung finden, um die energetischen Zustandsgrößen entsprechend zu modifizieren. Die Korrektureinrichtung kann dabei am Signaleingang oder am Signalausgang angeordnet sein. Möglich ist auch eine Anordnung vor oder hinter oder Integration in der Kombination der Gesamtenergie. Die Korrektur kann auch in die Berechnung der kinetischen und potentiellen Energie oder in die Modulauswertung integriert werden.

Die Aufgabe wird ferner durch ein System zur Beeinflussung der Bewegung eines in seinen Bewegungsabläufen steuerbaren oder regelbaren Fahrzeugaufbaus eines Kraftfahrzeuges mit den in Anspruch 10 genannten Merkmalen gelöst. Dadurch, dass dem Dämpferregler wenigstens ein Korrekturglied zugeordnet ist, mittels dem der energetische Zustand wenigstens einer sich bewegenden Masse des Fahrzeuges ermittelbar ist, wobei das wenigstens eine Steuersignal den energetischen Zustand der wenigstens einen Masse berücksichtigt, ist vorteilhaft möglich, den Dämpferregler modular aufzubauen und in im Fahrzeug bestehende Systeme, beispielsweise in ein Steuergerät, in einfacher Art und Weise zu integrieren, und in einfacher Weise Störgrößen, insbesondere aus Straßenanregungen, zu berücksichtigen.

Weitere bevorzugte Ausgestaltungen ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:

Figur 1　　schematisch ein Kraftfahrzeug mit einer Dämpferregelung;

Figur 2　　eine Prinzipskizze eines Kraftfahrzeuges mit vertikalen Eckaufbaugeschwindigkeiten;

Figur 3　　eine Prinzipskizze eines Kraftfahrzeuges mit vertikalen Modalaufbaugeschwindigkeiten;

Figur 4　　eine Prinzipskizze eines Kraftfahrzeuges mit im Dämpfersystem angeordneten Sensoren und den resultierenden Rad-, Aufbau- und Dämpfergeschwindigkeiten;

Figur 5　　eine Grobstruktur der Funktionsmodule einer Dämpferregelung;

Figur 6　　ein Blockschaltbild eines Standardregelkreises;

Figur 7　　ein Blockschaltbild eines erweiterten Regelkreises;

Figur 8　　eine Regelung mit einer Korrektur der Eingangsgröße über den energetischen Straßenzustand;

Figur 9　　die Regelung mit einer Korrektur der Ausgangsgröße über den energetischen Straßenzustand;

Figur 10　　eine Korrektur der Filtereingangsgrößen über den energetischen Straßenzustand;

Figur 11　　ein Entscheidungsverfahren über den energetischen Straßenzustand zur Wahl der geeigneten Reglerausgangsgröße;

Figur 12　　eine Übersichtermittlung der energetischen Zustandsgröße eges inklusive der Zustandsgrößenauswerteeinheit für ein (Regler-)Modul;

Figur 13　　ein Beispielrechnungsablauf zur Ermittlung der Zustandsgröße eges_xx für das Modul xx und

Figur 14　　ein Beispielrechnungsablauf zur Ermittlung der Zustandsgröße eges mit einer zusätzlichen Korrektur der Eingangsgrößen über Fahrzustand, Fahreraktivität und Modus/Fahrweise.

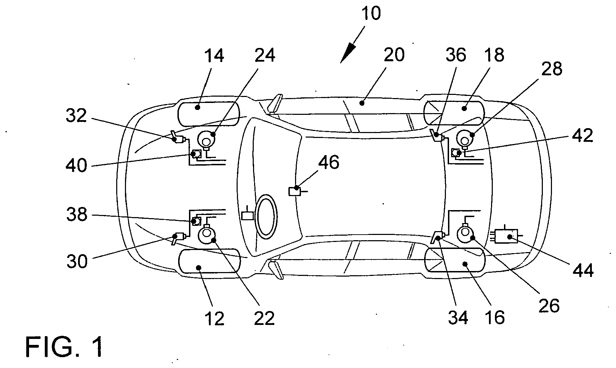

Figur 1 zeigt schematisch in einer Draufsicht ein insgesamt mit 10 bezeichnetes Kraftfahrzeug. Aufbau und Funktion von Kraftfahrzeugen sind allgemein bekannt, so dass im Rahmen der vorliegenden Beschreibung hierauf nicht näher eingegangen wird.

Das Kraftfahrzeug 10 besitzt vier Räder 12, 14, 16 und 18. Die Räder 12, 14, 16 und 18 sind über eine bekannte Radaufhängung an einem Aufbau 20 des Kraftfahrzeuges 10 befestigt. Unter Aufbau 20 wird im Rahmen der Erfindung allgemein die Fahrzeugkarosserie mit der Fahrgastzelle verstanden. Zwischen den Rädern 12, 14, 16 und 18 einerseits und dem Aufbau 20 ist jeweils ein Dämpfer 22, 24, 26 beziehungsweise 28 angeordnet. Die Dämpfer 22, 24, 26 und 28 sind parallel zu nicht dargestellten Federn angeordnet. Die Dämpfer 22, 24, 26 und 28 sind beispielsweise als semi-aktive Dämpfer ausgebildet, das heißt durch Anlegen eines Steuersignals an ein Stellmittel der Dämpfer kann die Dämpferkraft variiert werden. Das Stellmittel ist üblicherweise als elektromagnetisches Ventil ausgebildet, so dass das Stellsignal ein Steuerstrom für das Ventil ist.

Jedem Rad beziehungsweise jedem Dämpfer ist ein Wegsensor 30, 32, 34 beziehungsweise 36 zugeordnet. Die Wegsensoren sind als Relativwegsensoren ausgebildet, das heißt diese messen eine Veränderung des Abstandes des Aufbaus 20 von dem jeweiligen Rad 12, 14, 16 beziehungsweise 18. Typischerweise werden hier sogenannte Drehwinkel-Wegsensoren eingesetzt, deren Aufbau und Funktion allgemein bekannt sind.

Der Aufbau 20 umfasst ferner drei an definierten Punkten angeordnete Vertikalbeschleunigungssensoren 38, 40 und 42. Diese Beschleunigungssensoren 38, 40 und 42 sind fest an dem Aufbau 20 angeordnet und messen die Vertikalbeschleunigung des Aufbaus im Bereich der Räder 12, 14 beziehungsweise 18. Im Bereich des linken hinteren Rades 16 kann die Beschleunigung aus den drei anderen Beschleunigungssensoren rechnerisch ermittelt werden, so dass hier auf die Anordnung eines eigenen Beschleunigungssensors verzichtet werden kann.

Die Anordnung der Sensoren ist hier lediglich beispielhaft. Es können auch andere Sensoranordnungen, beispielsweise ein vertikaler Aufbaubeschleunigungssensor und zwei Drehwinkelsensoren oder dergleichen, zum Einsatz kommen.

Das Kraftfahrzeug 10 umfasst ferner ein Steuergerät 44, das über Signal- beziehungsweise Steuerleitungen mit den Stellmitteln der Dämpfer 22, 24, 26 und 28, den Wegsensoren 30, 32, 34 und 36 und den Beschleunigungssensoren 38, 40 und 42 verbunden ist. Das Steuergerät 44 übernimmt die nachfolgend noch näher zu erläuternde Dämpferregelung. Daneben kann das Steuergerät 44 selbstverständlich auch weitere, hier nicht zu betrachtende Funktionen innerhalb des Kraftfahrzeuges 10 übernehmen. Das Kraftfahrzeug 10 umfasst ferner ein Schaltmittel 46, beispielsweise einen Taster, ein Drehrad oder dergleichen, mittels dem von einem Fahrzeugführer eine Anforderung an die Bewegung des Aufbaus 20 gewählt werden kann. Hier kann beispielsweise zwischen der Anforderung "Komfort", der Anforderung "Sport" und der Anforderung "Basis" gewählt werden. Die Wahl ist entweder stufenförmig zwischen den drei Modi oder stufenlos mit entsprechenden Zwischenmodi möglich.

Das Schaltmittel 46 ist ebenfalls mit dem Steuergerät 44 verbunden.

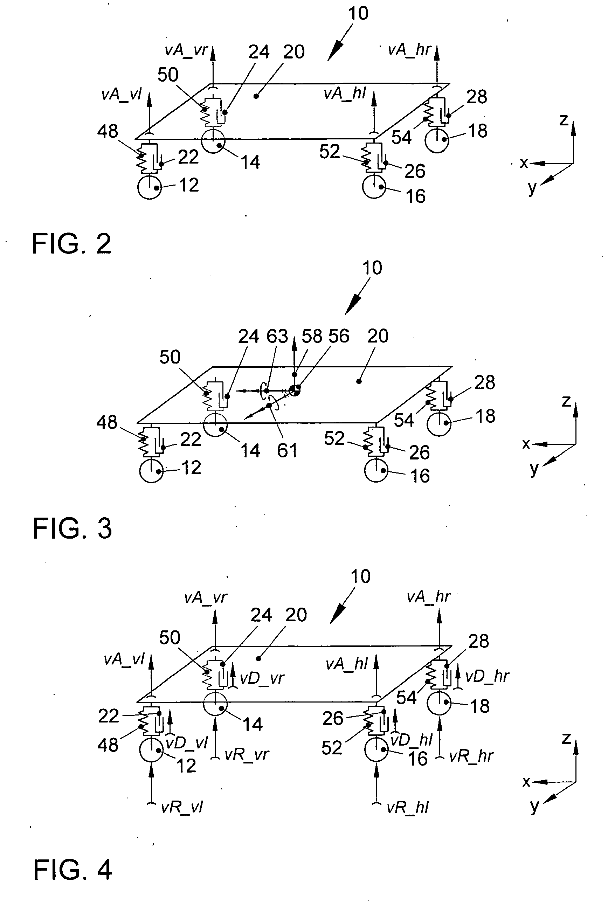

Figur 2 zeigt eine Prinzipskizze des Kraftfahrzeuges 10, wobei hier der Aufbau 20 als ebene Fläche angedeutet ist. An den Ecken des Aufbaus 20 sind jeweils die Räder 12, 14, 16 und 18 über eine Feder-Dämpfer-Kombination in an sich bekannter Art und Weise angeordnet. Die Feder-Dämpfer-Kombination besteht aus den Dämpfern 22, 24, 26 und 28 und jeweils parallel geschalteten Federn 48, 50, 52 und 54. An den Ecken des Aufbaus 20 sind die in Figur 1 dargestellten Beschleunigungssensoren 38, 40 beziehungsweise 42 angeordnet, mittels denen die vertikale Geschwindigkeit an den Ecken des Aufbaus 20 bestimmt werden kann. Hierbei handelt es sich um die Geschwindigkeiten vA_vl (Geschwindigkeit Aufbau vorne links), vA_vr (Geschwindigkeit Aufbau vorne rechts), vA_hl (Geschwindigkeit Aufbau hinten links) und vA_hr (Geschwindigkeit Aufbau hinten rechts). Die Geschwindigkeit kann aus den mittels der Beschleunigungssensoren gemessenen Beschleunigungen durch Integration errechnet werden.

Figur 3 zeigt wiederum die Prinzipskizze des Kraftfahrzeuges 10, wobei gleiche Teile wie in den vorhergehenden Figuren mit gleichen Bezugszeichen versehen und nicht nochmals erläutert sind. In einem Schwerpunkt 56 sind die Modalbewegungen des Aufbaus 20 verdeutlicht. Dies ist einerseits ein Hub 58 in vertikaler Richtung (z-Richtung), ein Nicken 61, das heißt eine Drehbewegung um eine in der y-Achse liegende Querachse, und ein Wanken 63, das heißt eine Drehbewegung um eine in der x-Achse liegende Längsachse des Kraftfahrzeuges 10.

Figur 4 zeigt eine weitere Prinzipskizze des Kraftfahrzeuges 10, wobei hier, in Ergänzung zu der Darstellung in Figur 2, weitere Signale dargestellt sind. Zusätzlich sind hier die Dämpfergeschwindigkeiten vD dargestellt, wobei vD_vl die Dämpfergeschwindigkeit für den Dämpfer 22 (vorne links), vD_vr die Dämpfergeschwindigkeit für den Dämpfer 24 (vorne rechts), vD_hl die Dämpfergeschwindigkeit für den Dämpfer 26 (hinten links) und vD_hr die Dämpfergeschwindigkeit für den Dämpfer 28 (hinten rechts) ist. Die Dämpfergeschwindigkeiten können über eine Differenzierung aus den Signalen der Wegsensoren 30, 32, 34 beziehungsweise 36 (Figur 1) ermittelt werden. In Figur 4 sind ferner die Radgeschwindigkeiten vR angedeutet. Hier steht Geschwindigkeit vR_vl für das Rad 12 (vorne links), vR_vr für das Rad 14 (vorne rechts), vR_hl für das Rad 16 (hinten links) und vR_hr für das Rad 18 (hinten rechts). Die Radgeschwindigkeiten vR können beispielsweise über Radbeschleunigungssensoren ermittelt werden.

Da sowohl die Aufbaugeschwindigkeiten vA, die Dämpfergeschwindigkeiten vD und die Radgeschwindigkeiten vR alle den gleichen Richtungsvektor besitzen (in z-Richtung), besteht der Zusammenhang vD=vA-vR. Hierdurch müssen nicht alle Messgrößen in Form von Messsignalen vorliegen, sondern können aus den anderen Messgrößen errechnet werden.

Anhand der bisherigen Erläuterungen wird deutlich, dass es für eine effektive Regelung des Bewegungsablaufes des Aufbaus auf die Bereitstellung eines Stellstromes für das Steuermittel der Dämpfer ankommt. Nachfolgend wird auf die Bereitstellung dieses Stellstromes unter Berücksichtigung der Umsetzung der erfindungsgemäßen Lösungen näher eingegangen.

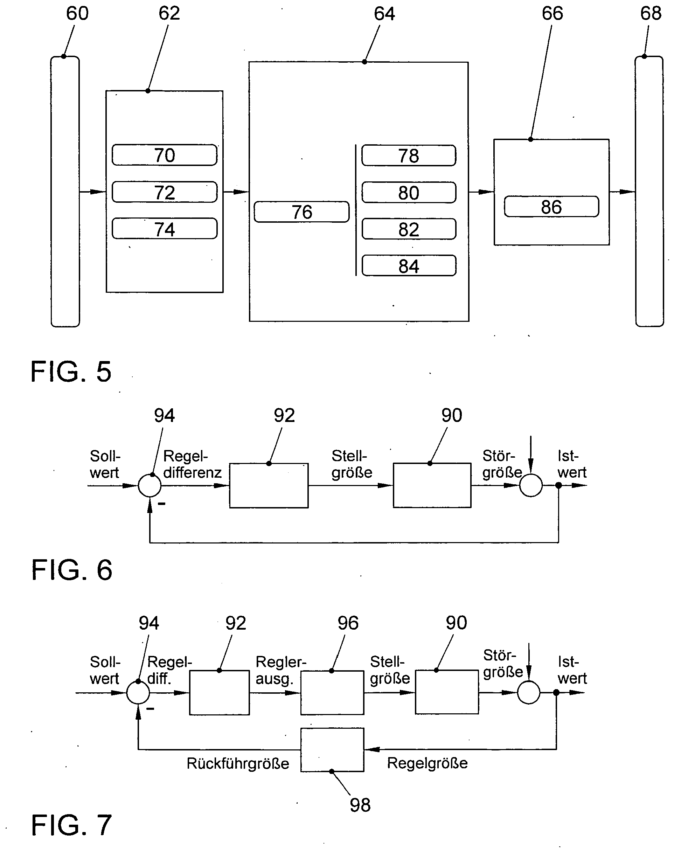

Figur 5 zeigt in einem Blockschaltbild eine Grobstruktur der Funktionsmodule zur erfindungsgemäßen Dämpferregelung. Die einzelnen Module sind aus Gründen der Übersichtlichkeit und Verständlichkeit gekapselt dargestellt. Die gesamte Struktur ist vorteilhafterweise hierarchisch über mehrere Ebenen aufgebaut. Die Funktionsmodule sind in einem Dämpferregler, vorzugsweise dem Steuergerät 44 (Figur 1) integriert. Die Dämpferregelung umfasst ein Signaleingangsmodul 60, ein Hilfsfunktionsmodul 62, ein Reglermodul 64, ein Auswertemodul 66 und ein Signalausgangsmodul 68. In dem Signaleingangsmodul 60 werden die Sensorsignale der Wegsensoren 30, 32, 34 beziehungsweise 36 und der Beschleunigungssensoren 38, 40 und 42 sowie weitere, über den CAN-Bus des Kraftfahrzeuges zur Verfügung stehende, Signale eingelesen. Das Hilfsfunktionsmodul 62 umfasst ein Man-Machine-Interfacemodul 70, ein Filtermodul 72 und ein Beladungserkennungsmodul 74.

Das Reglermodul 64 umfasst ein Straßenerkennungsmodul 76, ein Endlagendämpfungsmodul 78, ein Querdynamikmodul 80, ein Längsdynamikmodul 82 sowie ein Vertikaldynamikmodul 84. Das Auswertelogikmodul 66 umfasst ein Stromberechnungsmodul 86. Die Reglermodule 76, 78, 80, 82 und 84 generieren vorteilhafterweise einen Strom, oder eine Größe, die proportional zum Strom ist. Im Stromberechnungsmodul 86 findet die Stromberechnung aller Reglerausgangsgrößen zu Steuergrößen für die Dämpfer 22, 24, 26 beziehungsweise 28 statt. Über das Signalausgangsmodul 68 werden diese Stellströme den Dämpfern zur Verfügung gestellt. Sowohl das Signaleingangsmodul 60 als auch das Signalausgangsmodul 68 können optional selbstverständlich auch weitere Signale empfangen beziehungsweise ausgeben, je nach Ausstattung des betreffenden Kraftfahrzeuges.

In Figur 6 ist ein Standardregelkreis dargestellt. Dieser besteht aus einer Strecke 90, einem Regler 92 und einer negativen Rückkopplung der Regelgröße, das heißt des Istwertes auf dem Regler 92. Die Regeldifferenz wird aus der Differenz zwischen Sollwert (Führungsgröße) und Regelgröße berechnet. Die Stellgröße wirkt auf die Strecke 90 und damit auf die Regelgröße. Die Störgröße bewirkt eine, normalerweise unerwünschte, Veränderung der Regelgröße, die kompensiert werden muss. Die Eingangsgröße des Reglers 92 ist die Differenz aus dem gemessenen Istwert der Regelgröße und dem Sollwert. Der Sollwert wird auch als Führungsgröße bezeichnet, dessen Wert durch den gemessenen Istwert nachgebildet werden soll. Da der Istwert durch Störgrößen verändert werden kann, muss der Istwert dem Sollwert nachgeführt werden. Eine in einem Vergleicher 94 festgestellte Abweichung des Istwertes von dem Sollwert, die sogenannte Regeldifferenz, dient als Eingangsgröße für den Regler 92. Durch den Regler 92 wird festgelegt, wie das Regelungssystem auf die festgestellten Abweichungen reagiert, beispielsweise schnell, träge, proportional, integrierend oder dergleichen. Als Ausgangsgröße des Reglers 92 ergibt sich eine Stellgröße, welche auf eine Regelstrecke 90 Einfluss nimmt. Die Regelung dient hauptsächlich zur Beseitigung von Störgrößen, um diese auszuregeln.

In Figur 7 ist eine detailliertere Darstellung des Regelkreises gemäß Figur 15 dargestellt. Es ist ein erweiterter Regelkreis mit den zusätzlichen Elementen Stellglied 96 und Messglied 98 gezeigt. Im Beispiel der erfindungsgemäßen Dämpferregelung setzt sich die Stelleinrichtung beziehungsweise das Stellglied 96 aus einer elektronischen Komponente und einer elektro-hydraulischen Komponente zusammen. Die elektronische Komponente entspricht dem Stromregler im Steuergerät 44, während die elektro-hydraulische Komponente dem elektrisch ansteuerbaren Ventil der Dämpfer 22, 24, 26 beziehungsweise 28 entspricht. In den nachfolgenden Ausführungen sollen diese jedoch nicht weiter betrachtet werden. Diese werden als ideal angenommen beziehungsweise ihr Einfluss wird vernachlässigt. Somit stimmt idealisiert der Reglerausgang, der die Steuergröße liefert, mit der Stellgröße überein oder ist zu dieser zumindest proportional. Der Regler 92 gemäß Figur 15 ist hierbei aufgeteilt in den eigentlichen Regler 92 und das Stellglied 96. Der Regler 92 dient dazu, eine Größe zu bestimmen, mit der auf eine durch den Vergleicher 94 festgestellte Regeldifferenz über das Stellglied 96 reagiert werden soll. Das Stellglied 96 liefert die notwendige Energie in der geeigneten physikalischen Form, um auf den Prozess beziehungsweise die Regelstrecke einzuwirken. In dem Messglied 98 wird der Istwert gemessen. Die Störgröße kann bei einer Regelung der Bewegung eines Fahrzeugaufbaus 20 in Unebenheiten der Fahrbahn, seitlich wirkenden Kräften, wie beispielsweise Wind oder dergleichen, oder ähnlichen Einflüssen begründet sein.

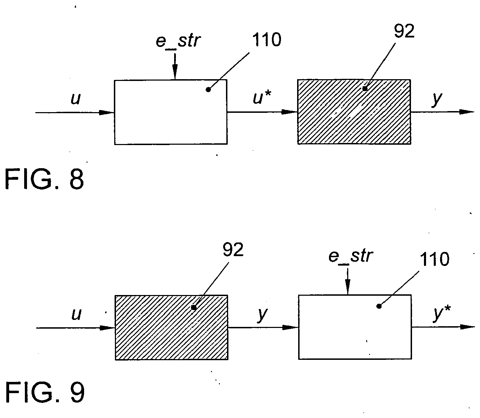

Die Figuren 8 und 9 zeigen, dass der festgestellte energetische Straßenzustand e_str sowohl auf die Eingangsgröße als auch auf die Ausgangsgröße eines Reglers 92 wirken kann. In Figur 8 wird eine Korrektureinrichtung 100 durch ein dem energetischen Straßenzustand e_str entsprechendes Signal beaufschlagt, so dass das Eingangssignal u in ein modifiziertes Ausgangssignal u* umgeformt wird, welches auf den Eingang des Reglers 92 wirkt, und damit dessen Ausgangssignal y beeinflusst.

In Figur 9 führt das Eingangssignal u am Regler 92 zu dessen Ausgangssignal y, welches dann in der Korrektureinrichtung 100 in Abhängigkeit von einem, dem energetischen Straßenzustand e_str entsprechenden Signal zu dem Signal y* modifiziert wird.

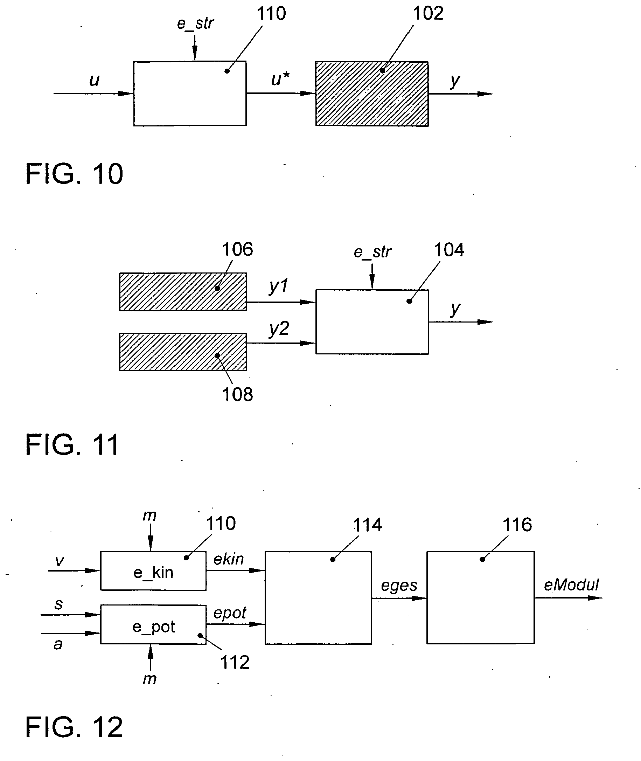

Figur 10 entspricht Figur 8 weitgehend, nur dass vor den hier nicht dargestellten Regler 92 noch ein Filter 102 geschaltet ist, welcher in der Lage ist, das Ausgangssignal u* der Korrektureinrichtung 100 zu bearbeiten. An den Filter 102 schließt sich dann der Regler 92 an, dessen Eingangssignal durch das Ausgangssignal des Filters 102 gebildet wird.

In Figur 11 ist dargestellt, dass ein Entscheider 104 in Abhängigkeit von einem dem energetischen Straßenzustand entsprechenden Signal e_str die beiden Ausgangssignale y1, y2 zweier Regler 106, 108 in geeigneter Weise kombiniert oder auswählt. Dabei kann beispielsweise die Regelung der Radbewegung (Regler 106) der Regelung der Aufbaubewegung (Regler 108) bevorzugt werden, wenn dies infolge des Signals e_str geboten erscheint.

In Figur 12 ist skizziert, wie die unterschiedlichen Energiegrößen berechnet und miteinander kombiniert werden können. Aufgrund der Geschwindigkeit v eines der zu regelnden Körper eines Fahrzeugs (zum Beispiel Rad, Dämpfer, Aufbau) lässt sich nach der weiter oben geschilderten Gesetzmäßigkeit und der Kenntnis eines der Masse des jeweiligen Körpers entsprechenden Signals m die kinetische Energie in einem Berechner 110 bestimmen. Dagegen berechnet ein Berechner 112 aus dem ausgelenkten (Feder-)Weg s und der dem Körper entgegenwirkenden Beschleunigung, beziehungsweise Erdbeschleunigung a und der Masse m dieses Körpers, dessen aktuelle potentielle Energie. Die den beiden Energieformen entsprechenden Signale ekin und epot werden in einer Kombinationseinheit 114 in geeigneter Weise miteinander zu einem Gesamtsignal eges kombiniert, welches in einem Auswertungsmodul 116 bewertet werden kann, wobei das Auswertungsmodul 116 dann ein Ausgangssignal eModul abgibt. Die Kombinationseinheit 114 gibt die Möglichkeit, die beiden Signale ekin, epot in einer geeigneten Weise zu bewerten und miteinander sinnvoll zu kombinieren.

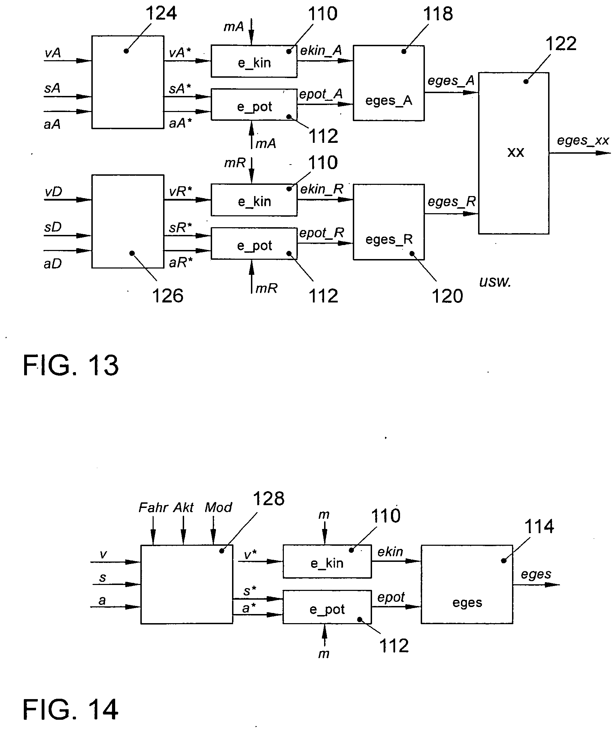

Das in Figur 12 skizzierte Verfahren wird in Figur 13 auf zwei verschiedene Körper des Fahrzeugs angewendet, zum Beispiel den Aufbau A und den Dämpfer D. Dabei wird aus den Signalen vA, sA, aA beziehungsweise vD, sD, aD in den Berechnern 110, 112 jeweils das der potentiellen beziehungsweise kinetischen Energie des betreffenden Körpers entsprechende Signal berechnet und analog Figur 12 einer Kombinationseinheit 118 beziehungsweise 120 zugeführt. Die Kombinationseinheiten 118, 120 kombinieren in geeigneter Weise die jeweils an ihren Eingängen anliegenden zwei Eingangssignale ekin_A, epot_A beziehungsweise ekin_R, epot_R (wobei R für Rad steht) zu den kombinierten Ausgangssignalen eges_A, eges_R, die dann in einer Auswertung 122 entsprechend den nachgeschalteten Reglern ausgewertet werden können. Die Auswertung 122 geschieht dabei nach verschiedenen Gesichtspunkten, zum Beispiel hinsichtlich der Längsdynamik LD, Querdynamik QD, Vertikaldynamik VD, Endlagen EL, Stromberechnung IB, Filter FT.

Vor die Berechner 110, 112 sind zwei Filter 124, 126 geschaltet, die im Bedarfsfall die an ihren Eingängen liegenden Eingangssignale aufbereiten, etwa in dem Fall, dass die dem Aufbau A oder dem Dämpfer D zugeordneten Signale durch Frequenz-Filterung herausgehoben werden müssen. Derartige Filter erübrigen sich aber, wenn die als Quelle dienenden Sensoren für die genannten Eingangssignale den betreffenden Körpern, also zum Beispiel Aufbau und Dämpfer, direkt zugeordnet sind und somit eine Trennung durch Filterung nicht notwendig wird. Im Übrigen ist der Aufbau nach Figur 13 analog zu dem Aufbau nach Figur 12.

In Figur 14 ist eine Ergänzung zu Figur 12 beziehungsweise 13 in Form eines Korrekturgliedes 128 eingeführt. Somit wird ein Einfluss zusätzlicher Zustandsgrößen, wie beispielhaft Fahrzustand Fahr (Längs-, Querdynamik), Fahreraktivität Akt (Gas, Bremse, Lenkung) sowie Modus/Fahrweise Mod (sportlich/komfortabel), realisiert.

Die Erfindung betrifft also ein Verfahren oder Regelungssystemkomponenten, wobei energetische Zustandsgrößen ermittelt werden, die sich aufgrund der Störanregung ergeben.

Bezugszeichenliste

| | |
|---|---|
| 10 | Kraftfahrzeug |
| 12 | Rad |
| 14 | Rad |
| 16 | Rad |
| 18 | Rad |
| 20 | Aufbau |
| 22 | Dämpfer |
| 24 | Dämpfer |
| 26 | Dämpfer |
| 28 | Dämpfer |
| 30 | Wegsensor |
| 32 | Wegsensor |
| 34 | Wegsensor |
| 36 | Wegsensor |
| 38 | Beschleunigungssensoren |
| 40 | Beschleunigungssensoren |
| 42 | Beschleunigungssensoren |
| 44 | Steuergerät |
| 46 | Schaltmittel |
| 48 | Feder |
| 50 | Feder |
| 52 | Feder |
| 54 | Feder |
| 56 | Kennlinie |
| 58 | Hub |
| 60 | Signaleingangsmodul |
| 61 | Nicken |
| 62 | Hilfsfunktionsmodul |
| 63 | Wanken |
| 64 | Reglermodul |
| 66 | Signalausgangsmodul |
| 68 | Signalausgangsmodul |
| 70 | Man-Machine-Interfacemodul |
| 72 | Filtermodul |
| 74 | Beladungserkennungsmodul |
| 76 | Straßenerkennungsmodul |
| 78 | Endlagendämpfungsmoduls |
| 80 | Querdynamikmodul |
| 82 | Längsdynamikmodul |
| 84 | Vertikaldynamikmodul |
| 86 | Stromberechnungsmodul |
| 90 | Strecke |
| 92 | Regler |
| 94 | Vergleicher |
| 96 | Stellglied |
| 98 | Messglied |
| 100 | Korrektureinrichtung |
| 102 | Filter |
| 104 | Entscheider |
| 106 | Regler |
| 108 | Regler |
| 110 | Berechner |
| 112 | Berechner |
| 114 | Kombinationseinheit |
| 116 | Auswertungsmodul |
| 118 | Kombinationseinheit |
| 120 | Kombinationseinheit |
| 122 | Auswertung |
| 124 | Filter_A |
| 126 | Filter_R |
| 128 | Korrekturglied |

**Patentansprüche**

1. Verfahren zur Erzeugung von Signalen zur Beeinflussung der Bewegung eines in seinen Bewegungsabläufen steuerbaren oder regelbaren Fahrzeugaufbaus (20) eines Kraftfahrzeuges (10), wobei sensorisch die Bewegung des Fahrzeugaufbaus (20) ermittelt wird, die den ermittelten Sensorwerten entsprechenden Sensorsignale werden einem Dämpferregler zugeführt und der Dämpferregler wenigstens ein Steuersignal zur Ansteuerung semi-aktiven oder aktiven Dämpfern, liefert, mittels denen die Bewegung des Fahrzeugaufbaus (20) beeinflusst werden kann, wobei bei der Ermittlung des wenigstens einen Steuersignals der Einfluss externer Störeinflüsse, insbesondere aus einer Straßenanregung, berücksichtigt werden, wobei aufgrund der Störeinflüsse energetische Zustandsgrößen der sich bewegenden Massen des Fahrzeuges (10) ermittelt werden, und die Beeinflussung der Bewegung des Fahrzeugsaufbaus (20) durch Berücksichtigung der energetischen Zustandsgrößen erfolgt, **dadurch gekennzeichnet, dass** bei der Ermittlung der energetischen Zustandsgrößen der sich bewegenden Massen des Fahrzeugs (10) kinetische und potentielle Energiezustände berücksichtigt werden, wobei die kinetischen und potentiellen Energiezustände über eine Kombinationseinheit (114) zu einer Gesamtenergie zusammengefasst werden.

2. Verfahren nach Anspruch 1, **dadurch gekennzeichnet, dass** die energetischen Zustandsgrößen als Eingangsgrößen und/oder Ausgangsgrößen und/oder Entscheidergrößen für nachfolgende Regelungen verwendet werden.

3. Verfahren nach einem der vorhergehenden Ansprüche, **dadurch gekennzeichnet, dass** die energetischen Zustände für einzelne Körper berechnet werden, wobei die Körper der Fahrzeugaufbau (20), die Räder (12, 14, 16, 18) und die Dämpfer (22, 24, 26, 28) sind.

4. Verfahren nach Anspruch 3, **dadurch gekennzeichnet, dass** die energetischen Zustände der einzelnen Körper zu einem Gesamtzustand zusammengefasst werden.

5. Verfahren nach einem der vorhergehenden Ansprüche, **dadurch gekennzeichnet, dass** die energetischen Zustände der einzelnen Körper für einen oder mehrere nachgeschaltete Regler in gleicher oder unterschiedlicher Kombination zusammengefasst werden.

6. Verfahren nach einem der vorhergehenden Ansprüche, **dadurch gekennzeichnet, dass** als weitere Eingangsgrößen Fahrzustand, Fahreraktivität, Fahrgeschwindigkeit und/oder Fahrverhalten verwendet werden.

7. Verfahren nach Anspruch 8, **dadurch gekennzeichnet, dass** diese weiteren Eingangsgrößen als Korrektur für die die resultierenden energetischen Zustandsgrößen und/oder der Zusammenfassung der energetischen Zustandsgrößen dienen.

8. Verfahren nach einem der vorhergehenden Ansprüche, **dadurch gekennzeichnet, dass** Filter spezielle (Frequenz-)Ausprägungen der Eingangsgrößen der Berechnungseinheit der energetischen Zustandsgrößen ermöglichen.

9. Verfahren nach Anspruch 8, **dadurch gekenn-**

**zeichnet, dass** spezielle Ausprägungen für die Fahrzeugaufbaueigenfrequenz und/oder die Radeigenfrequenz erfolgen.

10. System zur Beeinflussung der Bewegung eines in seinen Bewegungsabläufen steuerbaren oder regelbaren Fahrzeugaufbaus (20) eines Kraftfahrzeuges (10), mit Sensoren, welche die Bewegung des Fahrzeugaufbaus (20) erfassen, mit steuerbaren oder regelbaren semi-aktiven oder aktiven Dämpfern, die zwischen dem Fahrzeugaufbau (20) und den Fahrzeugrädern (12, 14, 16, 18) angeordnet sind, mit einem Dämpferregler, mittels dem die Sensorsignale verarbeitet werden und wenigstens ein Ansteuersignal für die Dämpfer (22, 24, 26, 28) bereitgestellt wird, wobei dem Dämpferregler wenigstens ein Korrekturglied zugeordnet ist, mittels dem der energetische Zustand wenigstens einer sich bewegenden Masse des Fahrzeuges ermittelbar ist, wobei das wenigstens eine Steuersignal den energetischen Zustand der wenigstens einen Masse berücksichtigt, **dadurch gekennzeichnet, dass** das System derart ausgebildet ist, dass bei der Ermittlung des energetischen Zustandes der wenigstens einen sich bewegenden Masse des Fahrzeugs (10) kinetische und potentielle Energiezustände berücksichtigt werden, wobei die kinetischen und potentiellen Energiezustände über eine Kombinationseinheit (114) zu einer Gesamtenergie zusammengefasst werden.

11. Fahrzeug, insbesondere Kraftfahrzeug, mit einem System zur Beeinflussung der Bewegung eines in seinen Bewegungsabläufen steuerbaren oder regelbaren Fahrzeugaufbaus nach Anspruch 10.

**Claims**

1. Method for generating signals for influencing the movement of a vehicle body (20), whose movement sequences can be open-loop or closed-loop controlled, of a motor vehicle (10), wherein the movement of the vehicle body (20) is determined by sensor, the sensor signals corresponding to the determined sensor values are fed to a shock absorber controller, and the shock absorber controller supplies at least one control signal for evaluating semi-active or active shock absorbers, by means of which the movement of the vehicle body (20) can be influenced, wherein the influence of external interference effects, in particular from road excitation, are taken into account during the determination of the at least one control signal, wherein energetic state variables of the moving masses of the vehicle (10) are determined on the basis of the interference effects, and the movement of the vehicle body (20) is influenced by taking into account the energetic state variables,

**characterized in that**
kinetic and potential energy states are taken into account during the determination of the energetic state variables of the moving masses of the vehicle (10), wherein the kinetic and potential energy states are combined by means of a combination unit (114) to form a total amount of energy.

**2.** Method according to Claim 1, **characterized in that** the energetic state variables are used as input variables and/or output variables and/or decision variables for subsequent control processes.

**3.** Method according to one of the preceding claims, **characterized in that** the energetic states are calculated for individual bodies, wherein the bodies are the vehicle body (20), the wheels (12, 14, 16, 18) and the shock absorbers (22, 24, 26, 28).

**4.** Method according to Claim 3, **characterized in that** the energetic states of the individual bodies are combined to form a total state.

**5.** Method according to one of the preceding claims, **characterized in that** the energetic states of the individual bodies are combined, for one or more controllers connected downstream, in the same or in a different combination.

**6.** Method according to one of the preceding claims, **characterized in that** driving state, driver activity, driving speed and/or driving behaviour are used as further input variables.

**7.** Method according to Claim 8, **characterized in that** these further input variables serve as a correction for the the resulting energetic state variables and/or of the combination of the energetic state variables.

**8.** Method according to one of the preceding claims, **characterized in that** filters permit specific (frequency) implementations of the input variables of the calculation unit of the energetic state variables.

**9.** Method according to Claim 8, **characterized in that** specific implementations are carried out for the natural frequency of the vehicle body and/or the natural frequency of the wheels.

**10.** System for influencing the movement of a vehicle body (20), whose movement sequences can be open-loop or closed-loop controlled, of a motor vehicle (10), with sensors which detect the movement of the vehicle body (20), with open-loop or closed-loop controllable semi-active or active shock absorbers which are arranged between the vehicle body (20) and the vehicle wheels (12, 14, 16, 18), with a shock absorber controller by means of which the sensor signals are processed and at least one actuation signal is made available for the shock absorbers (22, 24, 26, 28), wherein at least one correction element is assigned to the shock absorber controller, by means of which correction element the energetic state of at least one moving mass of the vehicle can be determined, wherein the at least one control signal takes into account the energetic state of the at least one mass,
**characterized in that**
the system is embodied in such a way that kinetic and potential energy states are taken into account during the determination of the energetic state of the at least one moving mass of the vehicle (10), wherein the kinetic and potential energy states are combined by means of a combination unit (114) to form a total amount of energy.

**11.** Vehicle, in particular motor vehicle, with a system for influencing the movement of a vehicle body, whose movement sequences can be open-loop or closed-loop controlled, according to Claim 10.

**Revendications**

**1.** Procédé pour générer des signaux destinés à influencer le mouvement d'une carrosserie de véhicule (20) d'un véhicule automobile (10), dont le déroulement des mouvements peut être commandé ou régulé, le mouvement de la carrosserie de véhicule (20) étant déterminée par détection, les signaux de capteur correspondant aux valeurs de capteur déterminées étant acheminées à un régulateur d'amortisseurs et le régulateur d'amortisseurs délivrant au moins un signal de commande destiné à commander des amortisseurs semi-actifs ou actifs au moyen desquels le mouvement de la carrosserie de véhicule (20) peut être influencé, l'influence d'influences perturbatrices externes, notamment provenant d'une excitation par la route, étant prise en compte lors de la détermination de l'au moins un signal de commande, des grandeurs d'état énergétiques des masses en mouvement du véhicule (10) étant déterminées sur la base des influences perturbatrices, et le mouvement de la carrosserie de véhicule (20) étant influencé en tenant compte des grandeurs d'état énergétiques,
**caractérisé en ce que**
les états énergétiques cinétiques et potentiels sont pris en compte lors de la détermination des grandeurs d'état énergétiques des masses en mouvement du véhicule (10), les états énergétiques cinétiques et potentiels étant rassemblés en une énergie totale par le biais d'une unité de combinaison (114).

**2.** Procédé selon la revendication 1, **caractérisé en ce que** les grandeurs d'état énergétiques sont utilisées comme grandeurs d'entrée et/ou grandeurs de sortie et/ou grandeurs de décision pour les régulations qui suivent.

3. Procédé selon l'une des revendications précédentes, **caractérisé en ce que** les états énergétiques sont calculés pour les corps individuels, les corps étant la carrosserie de véhicule (20), les roues (12, 14, 16, 18) et les amortisseurs (22, 24, 26, 28).

4. Procédé selon la revendication 3, **caractérisé en ce que** les états énergétiques des corps individuels sont rassemblés en un état global.

5. Procédé selon l'une des revendications précédentes, **caractérisé en ce que** les états énergétiques des corps individuels sont rassemblés selon une combinaison identique ou différente pour un ou plusieurs régulateurs branchés en aval.

6. Procédé selon l'une des revendications précédentes, **caractérisé en ce que** les grandeurs d'entrée supplémentaires utilisées sont l'état de la conduite, l'activité du conducteur, la vitesse de déplacement et/ou le comportement de conduite.

7. Procédé selon la revendication 8, **caractérisé en ce que** ces grandeurs d'entrée supplémentaires servent de correction pour les les grandeurs d'état énergétiques résultantes et/ou de la synthèse des grandeurs d'état énergétiques.

8. Procédé selon l'une des revendications précédentes, **caractérisé en ce que** des filtres permettent des expressions (de fréquence) spéciales des grandeurs d'entrée de l'unité de calcul des grandeurs d'état énergétiques.

9. Procédé selon la revendication 8, **caractérisé en ce que** les expressions spéciales sont effectuées pour la fréquence propre de la carrosserie de véhicule et/ou la fréquence propre des roues.

10. Système pour influencer le mouvement d'une carrosserie de véhicule (20) d'un véhicule automobile (10), dont le déroulement des mouvements peut être commandé ou régulé, comprenant des capteurs qui détectent le mouvement de la carrosserie de véhicule (20), comprenant des amortisseurs semi-actifs ou actifs qui sont disposés entre la carrosserie de véhicule (20) et les roues de véhicule (12, 14, 16, 18), comprenant un régulateur d'amortisseurs au moyen duquel sont traités les signaux de capteur et est délivré au moins un signal de commande pour les amortisseurs (22, 24, 26, 28), au moins un élément de correction étant associé au régulateur d'amortisseurs à l'aide duquel peut être déterminé l'état énergétique d'au moins une masse en mouvement du véhicule, l'au moins un signal de commande tenant compte de l'état énergétique de l'au moins une masse, **caractérisé en ce que** le système est configuré de telle sorte que les états énergétiques cinétiques et potentiels sont pris en compte lors de la détermination de l'état énergétique de l'au moins une masse en mouvement du véhicule (10), les états énergétiques cinétiques et potentiels étant rassemblés en une énergie totale par le biais d'une unité de combinaison (114).

11. Véhicule, notamment véhicule automobile, équipé d'un système selon la revendication 10 pour influencer le mouvement d'une carrosserie de véhicule dont le déroulement des mouvements peut être commandé ou régulé.

FIG. 1

FIG. 2

FIG. 3

FIG. 4

60   62                      64                      66        68

```
70
72
74
```

```
76          78
            80
            82
            84
```

```
86
```

## FIG. 5

94          92                   90

Soll-      Regel-              Stell-              Stör-        Istwert       differenz           größe              größe        wert

−

## FIG. 6

94     92          96          90

Soll-   Regel-   Regler-    Stell-           Stör-     Istwert    diff.    ausg.      größe            größe     wert

−

Rückführgröße              Regelgröße

98

## FIG. 7

$e\_str$ 110 92

$u$ → $u^*$ → $y$ →

**FIG. 8**

92 $e\_str$ 110

$u$ → $y$ → $y^*$ →

**FIG. 9**

**FIG. 10**

**FIG. 11**

**FIG. 12**

FIG. 13

FIG. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3918735 A1
- DE 3930517
- WO 03035417 A1
- DE 10016896 A1
- DE 10019763 A1